# FASCICULE DE BREVET EUROPEEN

(11) **EP 0 453 739 B1**
(45) Date de publication et mention de la délivrance du brevet: **06.07.1994**
(21) Numéro de dépôt: 91103451.0
(22) Date de dépôt: 07.03.1991
(51) Int. Cl.: F27B 1/16

(54) **Dispositif d'injection d'air préchauffé dans un four à cuve**
Vorrichtung zum Einblasen vorgewärmter Luft in einen Schachtofen
Device for injecting preheated air into a shaft furnace

(30) Priorité: 27.04.1990 LU 87730
(43) Date de publication de la demande: 30.10.1991
(73) Titulaire: PAUL WURTH S.A., 1122 Luxembourg (LU)
(72) Inventeur: Mailliet, Pierre, L-1423 Howald (LU); Benck, Jean, L-3543 Dudelange (LU)
(74) Mandataire: Freylinger, Ernest T.

(56) Documents cités:
- DE-A- 2 517 472
- DE-A- 2 525 946
- DE-A- 3 146 305
- DE-C- 3 221 070
- FR-A- 2 284 081
- GB-A- 246 346
- GB-A- 1 170 953
- GB-A- 2 055 165

## Description

### DISPOSITIF D'INJECTION D'AIR PRECHAUFFE DANS UN FOUR A CUVE

La présente invention concerne un dispositif d'injection d'air préchauffé dans un four à cuve, constitué de plusieurs éléments distincts consistant chacun en un blindage extérieur et un revêtement réfractaire intérieur et comprenant une section oblique reliée par un coude, un busillon, une tuyère et une articulation à joint sphérique à la paroi du four, dans lequel la section oblique comporte un tube tronconique bridé par sa partie supérieure sur une tubulure supérieure faisant partie d'une conduite circulaire et dont la partie inférieure plonge axialement dans une tubulure inférieure solidaire du coude, un compensateur à soufflets assurant l'étanchéité entre le tube tronconique et la tubulure inférieure, ainsi que des tirants assurant la liaison mécanique entre le tube tronconique et la tubulure inférieure.

Ces dispositifs, plus généralement connus sous le nom de "porte-vent" sont exposés à des problèmes de mobilité et d'étanchéité. En effet, par suite de la température élevée de l'air préchauffé (température de l'ordre de 1200°C ou plus) et de la température élevée régnant à l'intérieur du four, la paroi de ce dernier, ainsi que la conduite circulaire et le porte-vent sont exposés à des dilatations et déformations thermiques causant des déplacements relatifs non négligeables entre la conduite circulaire et la paroi du four . Il faut donc que le porte-vent soit en mesure de compenser ces déplacements relatifs ou de s'y adapter, tout en évitant des fuites de gaz ou d'air préchauffé vers l'extérieur.

A ces sollicitations d'origine thermique s'ajoutent les sollicitations occasionnées par les pressions intérieures. En effet, l'air préchauffé qui est injecté à travers le porte-vent dans le four est, notamment dans les fours modernes, à une pression élevée qui, compte tenu des sections en présence, soumet le porte-vent à des forces de l'ordre de plusieurs tonnes, aussi bien en provenance de la conduite circulaire que de l'intérieur du four.

Les porte -vents connus conçus pour répondre à ces exigences comportent soit deux points d'articulation, soit trois points d'articulation avec, dans chaque cas, une articulation sphérique généralement entre la tuyère et le busillon, l'autre articulation ou les deux autres, suivant le type, se trouvant dans la section oblique reliant la conduite circulaire au coude du porte-vent.

Les articulations dans la section oblique sont généralement munies d un coussin d'étanchéité souple et d'un compensateur à soufflets faisant la jonction entre les sections mobiles.

Les porte -vents à trois points d'articulation, connus par exemple par le brevet U.S. 3,766,868 ont généralement l'avantage par rapport à ceux à deux points d'articulation de plus de possibilités d'adaptation ou de compensation des déformations et sollicitations, aussi bien des composantes radiales que des composantes axiales. Les deux articulations se trouvant dans la section oblique de ces porte -vents comportent généralement des moyens, tel que des cardans qui ont l'avantage d'absorber les composantes de force engendrées par la pression de l'air chaud de sorte que ces forces ne sont pas transmises sur l'articulation entre le busillon et la tuyère. Par contre, ces porte - vents à trois points d'articulation ont l'inconvénient d'un coût relativement élevé, ce qui n'est pas négligeable vu le grand nombre de porte-vents équipant un haut-fourneau.

Les porte-vents à deux articulations, connus par exemple du document DE-U 7325087 ont, quant à eux, l'avantage d'une plus grande simplicité et d'un coût plus modeste. Par contre, ces porte-vents sont beaucoup plus sensibles aux sollicitations et déformations, notamment aux composantes radiales qui occasionnent des écrasements du coussin d'étanchéité de l'articulation dans la section oblique et une usure plus rapide. Le porte-vent proposé dans le document précité est, en outre, soumis aux forces occasionnées par la pression de l'air chaud. Pour éviter que ces forces ne causent un déboîtement de l'articulation entre le busillon et la tuyère avec des fuites, la section oblique de ce porte-vent doit être attachée à la paroi du four. L'emplacement de cette attache n'est toutefois pas idéal à cause des trop grands déplacements du porte-vent et à cause de ses difficultés d'accès.

Le but de la présente invention est de prévoir un nouveau dispositif d'injection d'air préchauffé dans un four à cuve qui est relativement simple et peu coûteux et qui s'adapte de manière satisfaisante aux déformations et sollicitations.

Pour atteindre cet objectif, le dispositif proposé par la présente invention est essentiellement caractérisé en ce que la tubulure inférieure et le tube tronconique dans sa partie inférieure cylindrique sont mutuellement mobiles dans le sens axial et comportent des moyens de guidage extérieurs ou intérieurs limitatant leur mobilité radiale.

Autrement dit, les problèmes de domination des composantes radiales des forces et déplacements qui occasionnaient un écrasement du coussin d'étanchéité au niveau de l'articulation de certains porte -vents selon l'état de la technique sont supprimés par des moyens de limitation de la mobilité radiale ou angulaire du tube tronconique et de la tubulure inférieure et compensés par une mobilité axiale relative ou téléscopage de ces deux éléments.

Il a été établi que si ces moyens sont conçus pour empêcher un désalignement axial de plus de 2° entre le tube tronconique et la tubulure inférieure des résultats satisfaisants sont envisageables.

Selon un premier mode de réalisation ces moyens sont constitués par deux flancs solidaires d'une bride de la tubulure supérieure s'étendant latéralement, vu en direction du four, de part et d'autre du compensateur et guidés dans des encoches correspondantes d'une bride de la tubulure inférieure.

Selon un deuxième mode de réalisation, ces moyens sont constitués par un anneau de guidage intérieur solidaire d'une bride supérieure de la tubulure inférieure et entourant la partie cylindrique inférieure du tube tronconique.

L'étanchéité au niveau du joint sphérique entre le busillon et la tuyère peut être maintenue par une paire de tirants à ressorts réglables tendus entre la paroi du four et le busillon ou le coude.

Ces tirants sont, de préférence, disposés de manière à ce que leur axe fasse un angle aïgu, vers le bas, par rapport à l'axe du busillon.

D'autres particularités et caractéristiques ressortiront de la description détaillée d'un mode de réalisation avantageux, présenté ci-dessous, à titre d'illustration, en référence aux dessins annexés dans lesquels:
la Figure 1 montre une vue latérale d'un porte-vent selon la présente invention;
la Figure 2 montre une coupe verticale axiale à travers le porte-vent de la Figure 1;
la Figure 3 montre schématiquement les composantes de force en présence;
la Figure 4 montre schématiquement et partiellement en coupe une vue latérale des moyens de limitation de la mobilité radiale du tube tronconique par rapport à la tubulure inférieure;
la Figure 4A montre une section horizontale suivant le plan de coupe A-A sur la Figure 4;
la Figure 4B montre une section suivant le plan de coupe B-B sur la Figure 4;
la Figure 5 montre schématiquement, en coupe axiale, un deuxième mode de réalisation des moyens de limitation de la mobilité radiale et
les Figures 6 et 6A illustrent schématiquement les possibilités de mouvement dans le cas d'une liberté d'un désalignement axial de 2° entre le tube tronconique et la tubulure inférieure.

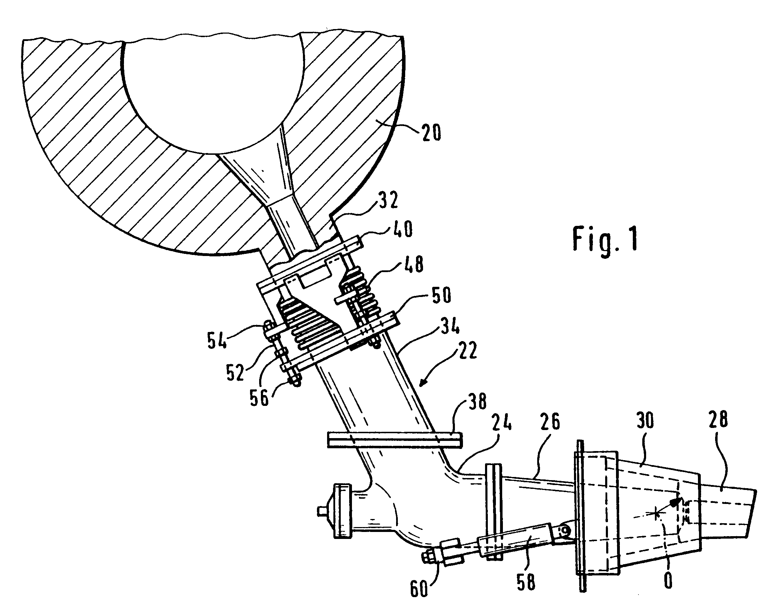

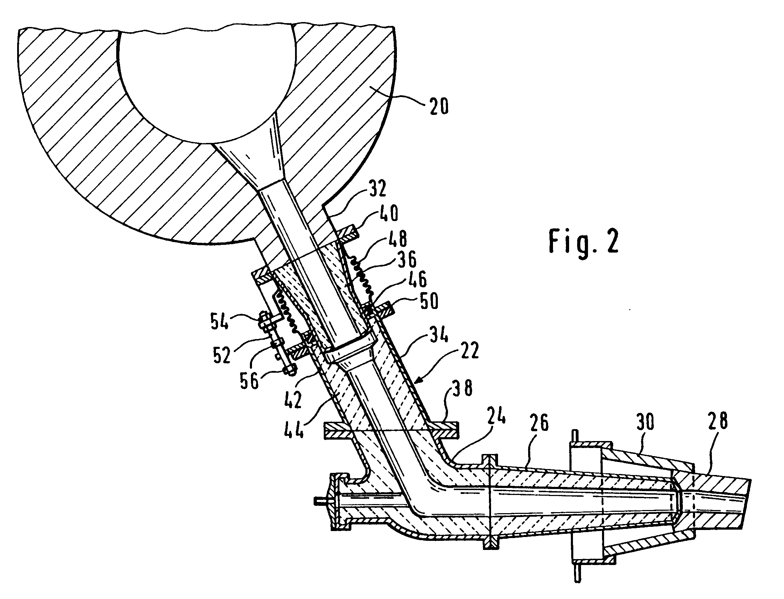

Les Figures 1 et 2 montrent schématiquement un porte-vent qui relie une conduite circulaire principale 20 aménagée autour d'un haut-fourneau non représenté à la paroi de celui-ci en vue de l'injection d'air préchauffé dans ce four. Ce porte-vent comporte une section oblique descendante 22 reliée par l'intermédiaire d'un coude 24 et d'un busillon 26 à une tuyère 28 qui est calée dans la tympe 30 aménagée dans la paroi du four. Le busillon 26 est relié à la tuyère 28 par une articulation sphérique dont le centre de courbure est représenté par O. La section oblique 22 est constituée d'une tubulure supérieure 32 qui fait partie de la conduite circulaire 20 et d'une tubulure inférieure 34 qui est fixée par une bride 38 sur le coude 24. La liaison entre les tubulures supérieure et inférieure 32 et 34 est assurée par un tube tronconique 36 avec une partie cylindrique inférieure qui est fixé par une bride 40 sur la tubulure supérieure 32 et dont la partie inférieure pénètre coaxialement dans la partie supérieure de la tubulure inférieure 34. Comme représenté sur la Figure 2, tous les éléments du porte-vent comportent un blindage métallique extérieur 42 et un revêtement réfractaire intérieur 44.

Selon l'une des particularités de la présente invention, la section 22 comporte un certain degré de liberté téléscopique dans la mesure où le tube tronconique 36 est dans sa région cylindrique axialement mobile par rapport à la tubulure inférieure 34 et vice versa. L'étanchéité entre ces deux éléments est assurée par un coussin d'étanchéité annulaire 46 entourant la partie cylindrique du tube tronconique 36 et un compensateur à soufflets 48 s'étendant de la bride supérieure 40 à une bride 50 de la tubulure inférieure 34. Trois tirants extérieurs 52 assurent la stabilité mécanique du porte-vent et soulagent le compensateur 48 en cas de démontage du porte-vent. A cet effet, les tirants 52 sont fixés par l'intermédiaire d'un écrou et d'un contre-écrou sur une plaque 54 solidaire de la bride supérieure 40 et s'étendent à travers la bride 50 de la tubulure inférieure tout en permettant un glissement axial relatif entre les tirants 52 et la bride 50 dans les limites fixées par des écrous de réglage 56.

Pour éviter des fuites au niveau du joint de l'articulation sphérique entre le busillon 26 et la tuyère 28, voire un déboîtement de cette articulation, une paire de tirants dont l'un est seulement visible en 58 sont tendus entre le coude 24 et la paroi du four. Ces tirants 58 comportent un ressort non représenté dont la force de traction est réglable au moyen d'un écrou 60.

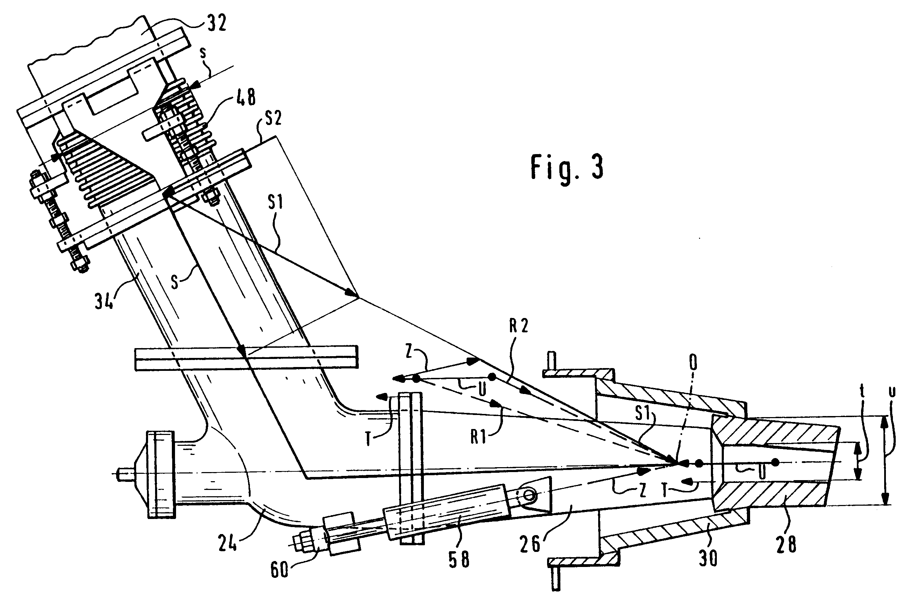

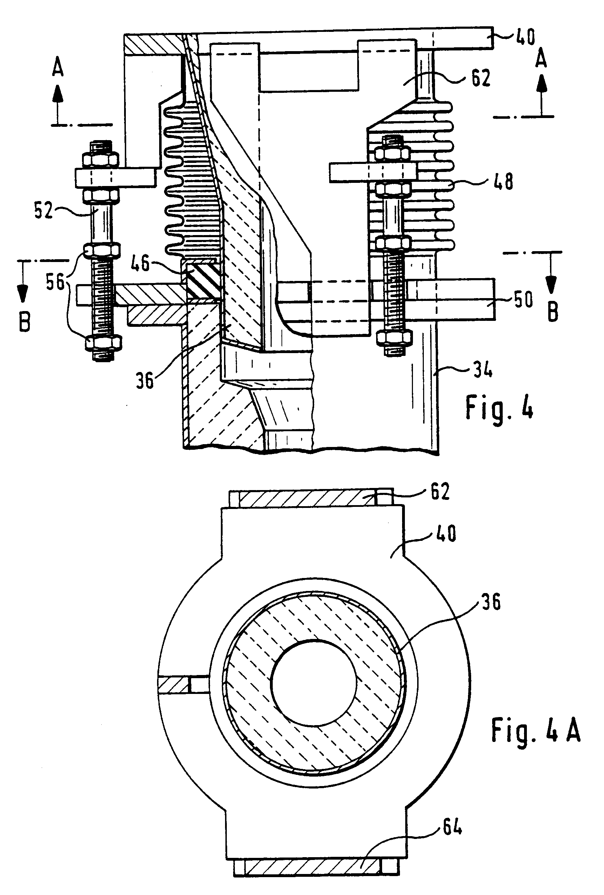

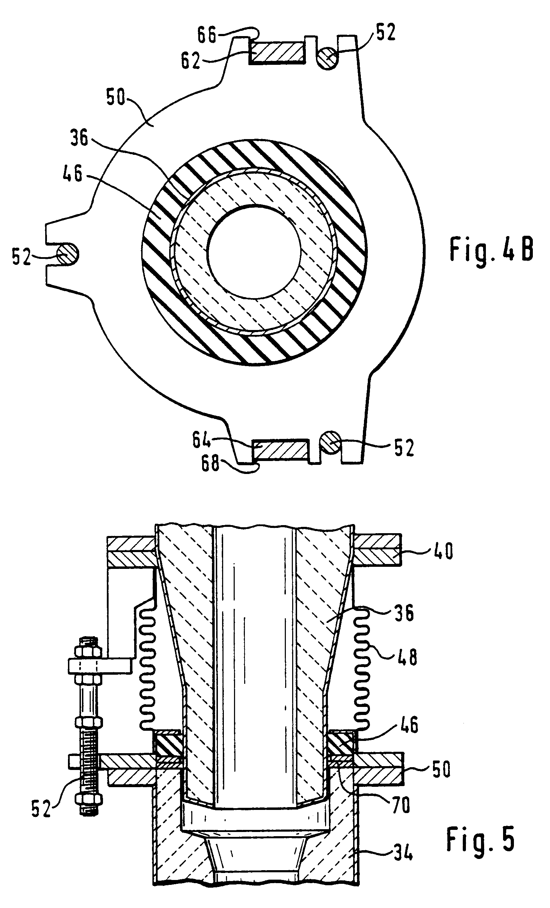

La Figure 3 représente un diagramme schématique des forces et de leurs composantes présentes dans un porte-vent selon les Figures 1 et 2. L'intérieur du porte-vent est d'abord soumis à une force occasionnée par la pression dans la conduite circulaire 20. Cette force, représentée par S s'exerce dans le sens axial et est proportionnelle à la pression et à la section moyenne du compensateur 48. A titre d'exemple, si le compensateur 48 a un diamètre moyen s de 580 mm et que la pression dans la conduite circulaire est de 4·10⁵Pa la force S est de 10560 daN. Etant donné que le porte-vent n'a pas d'appui dans la direction de la force S il faut décomposer celle-ci de manière à ce qu'elle trouve un appui, c'est-à-dire dans la direction du centre O de l'articulation entre le busillon 26 et la tuyère 28. Cette composante est représentée par S1 sur la Figure 3. Cette décomposition inévitable entraîne toutefois une composante S2 qui s'exerce dans le sens radial. Dans le cas de l'exemple précité est pour la configuration illustrée, la composante S1 est de l'ordre de 13000 daN et la composante S2 est de l'ordre de 7000 daN. L'un des objectifs de la présente invention est de prévoir des moyens, décrits plus en détails par la suite en référence aux Figures 4 à 5 destinées à contenir la composante S2, car l'absence de tels moyens exposerait la jonction entre le tube tronconique 36 et la tubulure 34 à des sollicitations radiales en flexion risquant d'abîmer le coussin 46 et le compensateur 48.

La composante S1 a été transférée sur la Figure 3 vers le point O étant donné que c'est là qu'elle exerce ses effets. La direction de la composante S1 telle que représentée n'est pas optimale étant donné qu'elle sollicite directement la partie inférieure du joint de l'articulation sphérique et risque de libérer la partie supérieure du joint et de provoquer des fuites à cet endroit. Heureusement toutefois, l'orientation de la composante S1 est modifiée sous l'effet de l'action des tirants 58 et de la pression à l'intérieur du four sur le busillon, la direction et la force de cette pression étant représentées par T sur la Figure 3. La force résultant de l'action des tirants 58 est représentée par Z. Cette composante Z transférée au départ de la composante S1 et après réduction de la composante de force due à la pression T fournit la résultante R1 qui représente la grandeur et la direction de la force s exerçant sur l'articulation entre le busillon 26 et la tuyère 28. Cette résultante R1 a une meilleure orientation que la composante S1 dans la mesure où son angle d'inclinaison par rapport à l'axe du busillon est plus faible. Il est d'ailleurs à noter que l'orientation de la résultante R1 est d'autant meilleure que l'angle α d'inclinaison des tirants 58 par rapport à l'axe du busillon 26 est plus grand.

La force des tirants 58 est réglée approximativement de manière à contenir l'effet de la pression sur la tuyère 28 de l'intérieur du four. La force résultant de cette pression est représentée par le vecteur U. Lorsque le diamètre de la section exposée de la tuyère 28 est de 450 mm la force U vaut 6.360 daN pour une pression à l'intérieur du four de 4·10⁵ Pa. Par conséquent, chacun des deux tirants 58 sera réglé de manière à exercer une force de l'ordre de 3000 daN. En combinant l'effet de la force des tirants Z et la force U à la composante S1 on obtient la résultante R2 qui est la force de la tuyère 28 sur la tympe 30.

La Figure 4 montre un premier mode de réalisation des moyens prévus par la présente invention pour contenir la composante radiale S2 de la force S expliquée en référence à la Figure 3. Dans ce premier mode de réalisation, la bride supérieure 40 comporte deux flancs 62, 64 qui s'étendent latéralement, vu en direction du four, de part et d'autre du compensateur 48 et qui sont guidés par leur partie inférieure rétrécie dans deux encoches correspondantes 66, 68 de la bride inférieure 50. Le guidage de ces flancs 62, 64 dans les encoches 66, 68 empêche, par conséquent, tout mouvement radial important de la bride 50 par rapport à la bride 40 tout en permettant un déplacement axial mutuel entre ces deux brides, c'est-à-dire un certain téléscopage entre le tube tronconique 36 et la tubulure 34. Autrement dit, les composantes radiales des efforts correspondant à la force S2 sont transmises par les flancs 62, 64 sur la conduite circulaire.

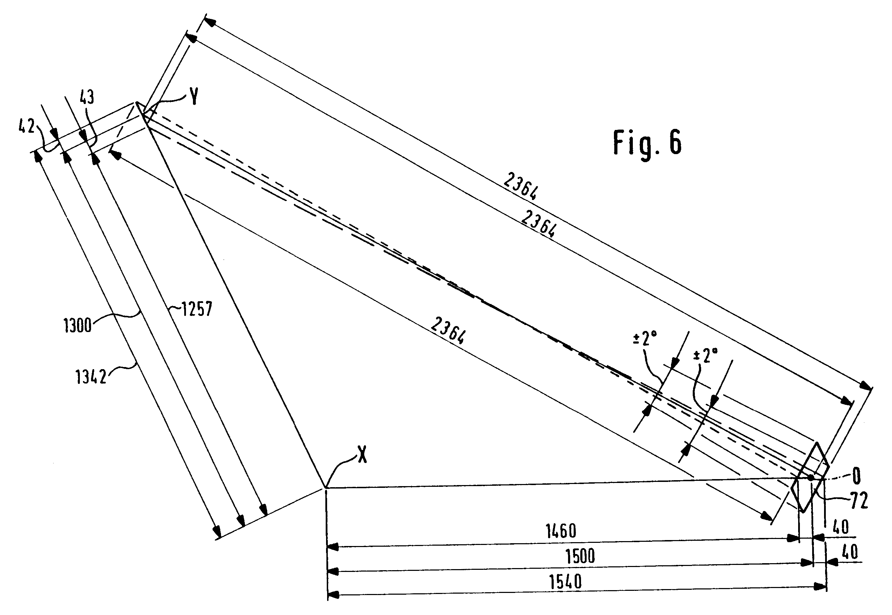

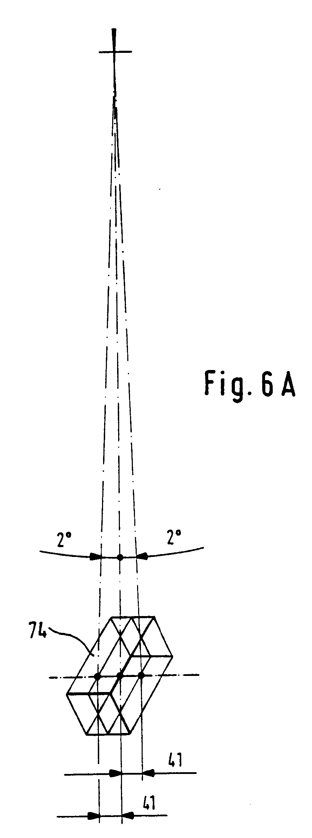

Il faut toutefois noter qu'aussi bien le guidage des flancs 62, 64 dans les encoches correspondantes 66 et 68, ainsi que le passage des tirants 52 dans la bride 50 et la pénétration du tube tronconique 36 dans la tubulure 34 est réalisé avec un certain jeu de manière à permettre un désalignement axial de l'ordre de 2° entre le tube tronconique 36 et la tubulure 34, ce qui comme il sera expliqué plus en détail en référence à la Figure 6 permet des degrés de liberté raisonnables pour permettre au porte-vent d'effectuer les mouvements nécessaires à la compensation des déplacements différentiels.

Dans le second mode de réalisation illustré sur la Figure 5, le guidage extérieur de la Figure 4 est remplacé par un guidage intérieur du tube tronconique 36. Ce guidage est réalisé par un anneau 70, par exemple en carbure de silicium qui entoure la partie cylindrique inférieure du tube 36. Comme dans le cas précédent, cet anneau 70 est disposé avec un certain jeu autour du tube 36 de manière a compenser les efforts radiaux, mais de tolérer un désalignement axial de l'ordre de 2° entre le tube 36 et la tubulure 34.

La Figure 6 illustre schématiquement la mobilité du porte-vent selon la présente invention à l'état chaud pour une tolérance d'un désalignement axial de 2° entre le tube tronconique et la tubulure inférieure. La Figure montre plus particulièrement les mouvements du centre O de l'articulation entre le busillon et la tuyère par suite des mouvements de la paroi du four et celui du centre Y de la bride 50 par rapport à un point imaginaire fixe X en supposant que la conduite circulaire et le tube 36 restent immobiles. Dans l'exemple illustré d'une distance de 2364 mm entre O et Y et d'une tolérance de désalignement de 2°, l'écart maximal du centre O, dans un plan vertical, est représenté par le quadrilatère 72. Tout mouvement à l'intérieur de ce quadrilatère 72 se traduit seulement par un déplacement axial du point Y. En tenant compte du fait que le point O peut également se déplacer dans le sens axial, c'est-à-dire dans le plan de la Figure 6, le quadrilatère de mobilité 72 devient un parallélépipède 74 comme illustré sur la Figure 6A. En pratique ce parallélépipède est un cube d'une longueur d'arête de l'ordre de 80 mm, ce qui correspond à une mobilité du point Y de l'ordre de 85 mm.

## Revendications

1. Dispositif d'injection d'air préchauffé dans un four à cuve constitué de plusieurs éléments distincts consistant, chacun, en un blindage extérieur (42) et un revêtement réfractaire intérieur (44) et comprenant une section oblique (22) reliée par un coude (24), un busillon (26), une tuyère (28) et une articulation à joint sphérique à la paroi du four, dans lequel la section oblique (22) comporte un tube tronconique (36) bridé par sa partie supérieure sur une tubulure supérieure (32) faisant partie d'une conduite circulaire (20) et dont la partie inférieure plonge axialement dans une tubulure inférieure (34) solidaire du coude (24), un compensateur à soufflets (48) assurant l'étanchéité entre le tube tronconique (36) et la tubulure inférieure (34), ainsi que des tirants (52) assurant la liaison mécanique entre le tube tronconique (36) et la tubulure inférieure (34), caractérisé en ce que la tubulure inférieure (34) et le tube tronconique (36) dans sa partie inférieure cylindrique sont mutuellement mobiles dans le sens axial et comportent des moyens de guidage extérieurs ou intérieurs limitatant leur mobilité radiale.

2. Dispositif selon la revendication 1, caractérisé en ce que lesdits moyens sont conçus pour empêcher un désalignement axial de plus de 2° entre le tube tronconique (36) et la tubulure inférieure (34).

3. Dispositif selon la revendication 1, caractérisé en ce que lesdits moyens sont constitués par deux flancs (62, 64) solidaires d'une bride (40) de la tubulure supérieure (32), s'étendant latéralement, vu en direction du four, de part et d'autre du compensateur (48) et guidés dans des encoches correspondantes (66, 68) d'une bride (50) de la tubulure inférieure (34).

4. Dispositif selon la revendication 1, caractérisé en ce que lesdits moyens sont constitués par un anneau de guidage intérieur (70) solidaire d'une bride supérieure (50) de la tubulure inférieure (34) et entourant la partie cylindrique inférieure du tube tronconique (36).

5. Dispositif selon la revendication 1, caractérisé en ce que l'étanchéité au niveau du joint sphérique entre le busillon (26) et la tuyère (28) est maintenue par une paire de tirants (58) à ressorts réglables tendus entre la paroi du four et le busillon (26) ou le coude (24).

6. Dispositif selon la revendication 5, caractérisé en ce que les tirants (58) sont disposés de manière à ce que leur axe fasse un angle aïgu α, vers le bas, par rapport à l'axe du busillon (26).

## Patentansprüche

1. Vorrichtung zum Einblasen von vorgewärmter Luft in einen Schachtofen, die aus mehreren Bauteilen zusammengesetzt ist, von denen jedes aus einer äußeren Panzerung (42) und einer inneren, feuerfesten Auskleidung (44) besteht, und die einen schrägen Abschnitt (22) aufweist, der über ein Kniestück (24), ein Düsenrohr (26), eine Düse (28) und ein Kugelgelenk mit der Wand des Ofens verbunden ist, wobei der schräge Abschnitt (22) besteht aus einem kegelstumpfförmigen Rohr (36), dessen oberes Ende an einen oberen Rohrstutzen (32) angeflanscht ist, der zu einer kreisförmigen Rohrleitung (20) gehört, und dessen unteres Ende in axialer Richtung in einen unteren Rohrstutzen (34) eingeschoben ist, der mit dem Kniestück (24) fest verbunden ist, einem Balgkompensator (48), der die Abdichtung zwischen dem kegelstumpfförmigen Rohr (36) und dem unteren Rohrstutzen (34) bewirkt, und aus Spannstangen (52), die die mechanische Verbindung zwischen dem kegelstumpfförmigen Rohr (36) und dem unteren Rohrstutzen (34) sicherstellen, dadurch gekennzeichnet, daß der untere Rohrstutzen (34) und das kegelstumpfförmige Rohr (36) bei seinem zylindrischen, unteren Teil in axialer Richtung gegeneinander verschiebbar sind, und äußere oder innere Führungsmittel aufweisen, die ihre radiale Beweglichkeit begrenzen.

2. Vorrichtung gemäß Anspruch 1, dadurch gekennzeichnet, daß die besagten Mittel so konzipiert sind, daß eine axiale Falschausrichtung von mehr als 2° zwischen dem kegelstumpfförmigen Rohr (36) und dem unteren Rohrstutzen (34) verhindert wird.

3. Vorrichtung gemäß Anspruch 1, dadurch gekennzeichnet, daß die besagten Mittel aus zwei Seitenschienen (62, 64) bestehen, die mit einem Flansch (40) des oberen Rohrstutzens (32) fest verbunden sind, und die sich, in Richtung des Ofens gesehen, auf beiden Seiten des Kompensators (48) erstrecken, wobei sie in entsprechenden Nuten (66, 68) eines Flanschs (50) des unteren Rohrstutzens (34) geführt werden.

4. Vorrichtung gemäß Anspruch 1, dadurch gekennzeichnet, daß die besagten Mittel aus einem inneren Führungsring (70) bestehen, der mit einem oberen Flansch (50) des unteren Rohrstutzens (34) fest verbunden ist und den unteren, zylindrischen Teil des kegelstumpfförmigen Rohrs (36) umgibt.

5. Vorrichtung gemäß Anspruch 1, dadurch gekennzeichnet, daß die Abdichtung im Bereich des zwischen dem Düsenrohr (26) und der Düse (28) angeordneten Kugelgelenks durch zwei mit einstellbaren Federn versehene Spannstangen (58) aufrechterhalten wird, die zwischen der Wand des Ofens und dem Düsenrohr (26) oder dem Kniestück (24) angebracht sind.

6. Vorrichtung gemäß Anspruch 5, dadurch gekennzeichnet, daß die Spannstangen (58) so angeordnet sind, daß ihre Achse unter einen spitzen Winkel α bezüglich der Achse des Düsenrohrs (26) nach unten gerichtet ist.

## Claims

1. Device for blowing preheated air into a shaft furnace, consisting of several separate elements, each consisting of an outer shielding (42) and an inner refractory lining (44) and comprising an oblique section (22) connected by a bend (24), a blast pipe (26), a nozzle (28) and a ball joint articulation to the wall of the furnace, in which device the oblique section (22) includes a frustoconcical tube (36) flanged by its upper part onto an upper tubing (32) forming part of a circular pipe (20) and whose lower part extends axially into a lower tubing (34) integral with the bend (24), and a bellows compensator (48) ensuring leaktightness between the frustoconical tube (36) and the lower tubing (34), as well as tie rods (52) ensuring mechanical linkage between the frustoconical tube (36) and the lower tubing (34), characterized in that the lower tubing (34) and the frustoconical tube (36) in its lower cylindrical part are mutually mobile in the axial direction and include outer or inner guide means limiting their radial mobility.

2. Device according to Claim 1, characterized in that the said means are designed to prevent axial misalignment of more than 2° between the frustoconical tube (36) and the lower tubing (34).

3. Device according to Claim 1, characterized in that the said means consist of two flanks (62, 64) integral with a flange (40) of the upper tubing (32), extending laterally, seen in the direction of the furnace, on either side of the compensator (48) and guided in corresponding notches (66, 68) of a flange (50) of the lower tubing (34).

4. Device according to Claim 1, characterized in that the said means consist of an inner guide ring (70) integral with an upper flange (50) of the lower tubing (34) and surrounding the lower cylindrical part of the frustoconical tube (36).

5. Device according to Claim 1, characterized in that the leaktightness at the ball joint between the blast pipe (26) and the nozzle (28) is maintained by a pair of tie rods (58) with adjustable springs stretched between the wall of the furnace and the blast pipe (26) or the bend (24).

6. Device according to Claim 5, characterized in that the tie rods (58) are arranged so that their axes make an acute angle α, downwards, with respect to the axis of the blast pipe (26).
